# EUROPÄISCHE PATENTSCHRIFT

(11) **EP 1 298 504 B1**
(45) Veröffentlichungstag und Bekanntmachung des Hinweises auf die Patenterteilung: **04.08.2004**
(21) Anmeldenummer: 02020578.7
(22) Anmeldetag: 17.09.2002
(51) Int. Cl.: G05B 11/42, G05B 13/04

(54) **Verfahren und Vorrichtung zur Verbesserung des Ansprechverhaltens einer befehlsgesteuerten Anlage**
Method and device for improving the response characteristic of a command controlled installation
Procédé et dispositif pour améliorer la réponse d'une installation contrôlée par commandes

(30) Priorität: 28.09.2001 DE 10148097
(43) Veröffentlichungstag der Anmeldung: 02.04.2003
(73) Patentinhaber: Dürr Systems GmbH, 70435 Stuttgart (DE)
(72) Erfinder: Meissner, Alexander, Dr., 70193 Stuttgart (DE)
(74) Vertreter: Heusler, Wolfgang, Dipl.-Ing.

(56) Entgegenhaltungen:
- US-A- 4 353 730
- US-A- 5 357 583
- US-A- 5 394 322
- US-A- 5 715 158
- US-A- 5 847 952
- US-A- 6 081 751

## Beschreibung

Die Erfindung betrifft ein Verfahren zur Verbesserung des Ansprechverhaltens einer befehlgesteuerten Anlage sowie eine Vorrichtung zur Durchführung dieses Verfahrens gemäß dem Oberbegriff der unabhängigen Patentansprüche.

Es handelt sich um ein System, bei dem auf einen Aktionsbefehl hin ein Applikationselement, dem ein dosiertes fluides Medium durch ein Transportmedium wie z.B. einen Schlauch zugeführt wird, aktiviert wird und "Weichheiten" des Systems ein verzögertes Ansprechen verursachen. Als fluides Medium kommen Gase, Flüssigkeiten, Pasten, Wachse usw. in Betracht.

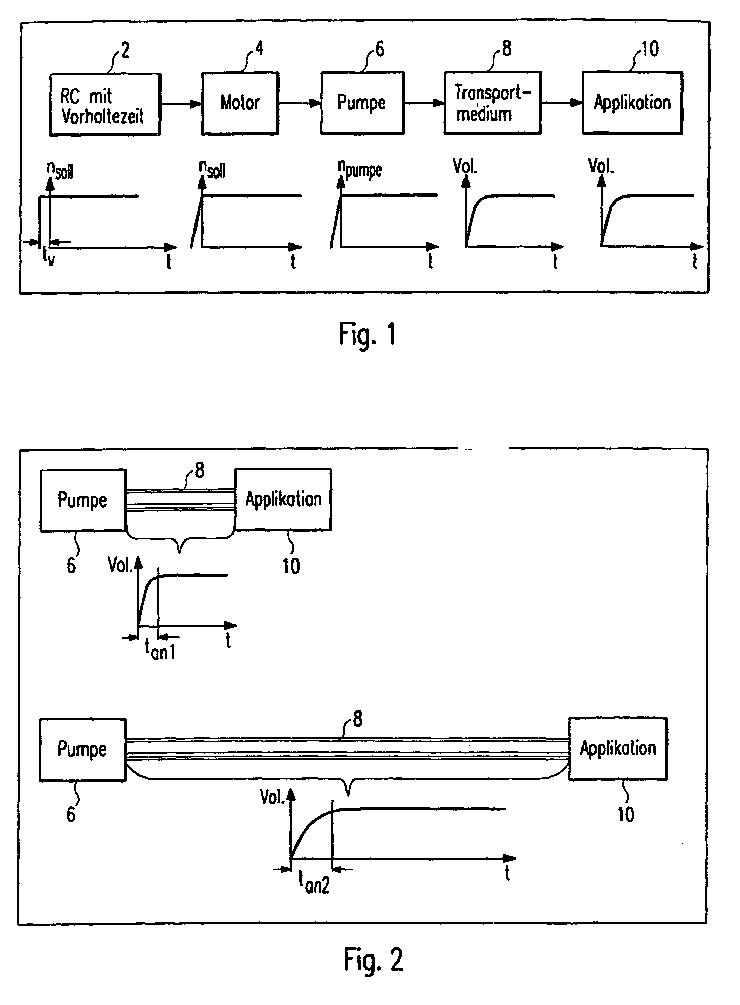

Beispielsweise kann ein flüssiges oder pastöses Medium mittels eines Dosierantriebes durch ein Transportmedium zu einem Applikationselement für dieses Medium transportiert werden, wobei Nachgiebigkeiten auftreten, z.B. wenn das fluide Medium durch einen biegeschlaffen Schlauch transportiert wird. Das zeitliche Verhalten von Volumenströmen fluider Stoffmengen in technischen Systemen ist geprägt durch das dynamische Verhalten der Transportmedien, obwohl die Systeme auch durch andere Elemente verursachte Nachgiebigkeiten aufweisen können. Automatisch gesteuerte Fluidvolumenströme weisen beispielsweise aufgrund biegeschlaffer Schläuche gegenüber ihren Sollvorgaben eine gewisse Verzögerung auf, welche in der Prozesstechnik zu Qualitätsmängeln führen und daher unerwünscht sind. In der Lackiertechnik ist es z.B. entscheidend, den gewünschten Volumenstrom der Lackmenge am Zerstäuber in einer gewissen Zeiteinheit bereitzustellen. Hierbei gilt: Je kürzer diese Zeiteinheit ist, desto qualitativ besser ist der Prozess. Eine Möglichkeit diese Verzögerungen zu vermindern besteht darin, die Zufuhr des Lackvolumenstroms früher einzuleiten. Dies wird innerhalb der Steuerung durch Berücksichtigung einer Vorhaltezeit bei der Signalerzeugung realisiert. Eine Veranschaulichung der Teilsysteme beim Lackierprozess und deren Signalverarbeitung bzw. Signalverlauf ist in Figur 1 gezeigt. Es sei jedoch betont, daß auch andere Weichheiten im System auftreten können, die zu störenden Ansprechverzögerungen führen.

Die Anwendung dieses bekannten Verfahrens hat für das Beispiel des Dosierens von Fluiden in biegeschlaffen Transportmedien jedoch Nachteile. Entscheidend für das Bereitstellen von Fluidströmen in kurzer Zeit ist das dynamische Verhalten des biegeschlaffen Transportmediums, welches vom Fluid durchströmt wird und die Dosiereinheit und die Applikationstechnik miteinander verbindet. Je weiter Pumpe und Applikationstechnik geometrisch voneinander entfernt sind, desto länger ist das Transportmedium und desto größer die Verzögerungszeit der Dynamik des Transportmediums, wie es Figur 2 veranschaulicht.

Weitere Einflüsse auf das Zeitverhalten der Fluidmenge, die zu berücksichtigen sind, sind Beschaffenheit des Transportmediums, Viskosität des z.B. flüssigen oder pastösen Fluids sowie Temperatur des Fluids und des Transportmediums.

Aus US 4 353 730 ist es bekannt, einen Antriebsmotor beispielsweise eines Gebläses beim Anschalten zu übersteuern, um möglichst schnell die gewünschte Drehzahl einzustellen. Diese Druckschrift hat jedoch keinen Bezug zu Lackiersystemen und die Übersteuerung dient hierbei nicht zur Kompensation von Nachgiebigkeiten in einem Lackiersystem.

Darüber hinaus ist aus US 5 357 583 eine Regelung in einem Kraftstoffversorgungssystem bekannt, bei dem eine Übersteuerung erfolgt, um bei Sollwertänderungen den Einfluss von Kraftstoffkondensationen zu kompensieren. Auch diese Entgegenhaltung hat jedoch keinen Bezug zu Lackiersystemen und die Übersteuerung dient insbesondere nicht zur Kompensation von Nachgiebigkeiten in einem Lackiersystem.

Schließlich ist aus US 5 394 322 ein Regelungsverfahren bekannt, bei dem das zu regelnde System modelliert wird. Aus dieser Druckschrift ist jedoch keine Übersteuerung bekannt und es besteht bei dieser Druckschrift kein Bezug zur Regelung von Lackiersystemen.

Der Erfindung liegt die Aufgabe zugrunde, bei Systemen, deren Ansprechcharakteristik "Nachgiebigkeiten" aufweist, welche eine Ansprechverzögerung bewirken, Kompensationsmaßnahmen gegen solche Verzögerungen vorzusehen, so dass das System sich "steifer" verhält und schneller auf einen Aktionsbefehl reagiert. Als spezielles aber nicht ausschließliches Anwendungsgebiet soll die durch einen biegeschlaffen Verbindungsschlauch zwischen einer Dosiervorrichtung und einer Applikationsdüse einer Beschichtungsanlage bedingte Ansprechverzögerung zwischen dem Auftreten eines vom Steuercomputer ausgegebenen Aktionsbefehls und dem Austreten des Beschichtungsmaterials aus der Düse auf ein nicht mehr störendes Minimum verringert werden.

Diese Aufgabe wird durch das im Anspruch 1 angegebene Verfahren bzw. die im Anspruch 15 beschriebene Vorrichtung gelöst. Weiterbildungen der Erfindung sind in den Unteransprüchen gekennzeichnet.

Die Erfindung umfasst die technische Erkenntnis, dass sich bei einem verzögerungsbehafteten System, dessen Verzögerung von der Aussteuerung abhängig ist, durch gezieltes kurzzeitiges Übersteuern in derjenigen Richtung, in welcher eine Zustandsänderung bewirkt werden soll, die Verzögerungszeit zwischen dem Auftreten des Aktionsbefehls und der Reaktion des Systems auf ein im praktischen Fall nicht mehr störendes Maß verringern lässt.

Diese Erkenntnis lässt sich erfindungsgemäß in die Praxis umsetzen, indem man das betreffende System oder die Anlage als Modell in einem rechnerischen Ersatzbild nachbildet und die Kenngrößen der einzelnen Elemente dieses Ersatzbildes aufgrund der bekannten Eigenschaften und Daten der Bauelemente, Produktionsmaterialien etc. der realen Anlage bestimmt und dann anhand dieses Modells eine vorübergehende Übersteuerungskomponente für das vom Steuergerät als Aktionsbefehl ausgegebene Steuersignal so bestimmt, dass das Modell an seinem Ausgang so weit verzögerungsfrei reagiert, wie es im praktischen Fall erforderlich ist. Die Übersteuerungskomponente, die je nach gewünschter Änderungsrichtung auch als "Untersteuerungs"-Komponente bezeichnet werden kann, lässt sich vorteilhafterweise mit einem PD-, PID-, PT1-Glied oder einem PT2-Glied erzeugen, dem der Steuerbefehl als Sprungsignal zugeführt wird und das mit seiner Differenzialcharakteristik die vorübergehende Überhöhung in der Änderungsrichtung bewirkt. Durch entsprechende Bemessung des genannten Gliedes kann die Größe der Überhöhung und deren Abklingzeit variiert und gezielt so gewählt werden, dass das System in gewünschtem Maße verzögerungsfrei reagiert, also z.B. im Fall einer Lackieranlage bei Auftreten des vom Steuercomputer gelieferten Steuersignals ohne störende Verzögerung die Sprühdüse Lack zu sprühen beginnt.

Bei einem programmgesteuerten Lackierroboter, der hier als - allerdings nicht einschränkendes - Beispiel betrachtet sei, liefert ein Steuergerät Lackierbefehle in Form von Steuersignalen an ein Dosiersystem, etwa an einen Dosierkolbenantrieb oder einen Motor für eine Lackpumpe, die über irgend ein Transportmedium mit der Zerstäuberdüse verbunden ist. In diesem Transportmedium, das beispielsweise ein biegeschlaffer Schlauch sein kann, kann im System eine Nachgiebigkeit oder Weichheit auftreten, die durch den Pumpendruck zunächst erst einmal überwunden werden muss, bis an der Sprühdüse der zu deren Arbeiten erforderliche Druck aufgebaut ist. Dies ergibt eine Verzögerung zwischen dem Auftreten des Lackierbefehls und dem Lackaustritt aus der Düse, und dieser bei automatisch. arbeitenden Lackieranlagen außerordentlich störende verzögerte Beginn des Lackiervorgangs lässt sich durch die erfindungsgemäße Übersteuerung praktisch kompensieren. Die Nachgiebigkeit kann durch irgendwelche beteiligten Systemkomponenten des Farbführungssystems bedingt sein und muß nicht unbedingt auf einen Schlauch zurückzuführen sein.

Die hierzu erforderliche Übersteuerungskomponente hängt von den Parameterwerten des Systems ab, die bei einzelnen Anlagen unterschiedlich sein können oder sich auch im Lauf der Zeit, etwa durch Alterungserscheinungen, ändern können. Daher soll die Differenzialcharakteristik des PD-, PID-, PT1- oder PT2-Gliedes entsprechend veränderbar sein, und hierzu kann vorzugsweise ein abgespeichertes Kennfeld für die relevanten Parameterwerte vorgesehen werden, aus welchem die jeweils geeigneten Werte abgerufen werden, um das genannte Glied passend zu dimensionieren. Die in Frage kommenden Parameterwerte für ein solches Kennfeld lassen sich aus den bekannten Eigenschaften der Systemkomponenten, also etwa den Elastizitätseigenschaften der Schlauchmaterialien, Viskositäten der verwendeten Lacke, Kennlinien von Motor und Pumpe etc., bestimmen.

Die wesentlichen Vorteile der Erfindung sind:
- Kürzere Ansprechzeiten der Applikationstechnik gegenüber der Steuerung.
- Geometrische Trennung von Pumpeneinheit und Applikationstechnik und damit größere Wartungsfreundlichkeit und höhere Verfügbarkeit der Anlage.
- Geringerer Bauraum im Bereich der Applikationstechnik am bewegten Applikationsträger und damit geringere bewegliche Massen, womit sich eine höhere Dynamik realisieren läßt.
- Optimierung des Gesamtsystems zur automatischen Vorsteuerung.
- Anwendbarkeit bei verschiedenartigen Dosiersystemen.

Anwendungsbeispiele der Erfindung sind u.a.:
- Dosierung von automatisch gesteuerten Lackvolumenströmen bei der Verwendung von Lackiermaschinen und Lackierrobotern für alle Applikationstypen, wobei die Dosierpumpe stationär und außerhalb der Kabine liegt.
- Allgemeine Dosierung von Fluiden einschließlich Pasten oder Wachs mit kurzen Ansprechzeiten.

Die Erfindung sei nun anhand einiger erläuternder Darstellungen näher beschrieben. Es zeigen:
- Figur 1: eine Veranschaulichung von Teilsystemen bei einem Lackierprozess mit zugehörigen Signalverläufen,
- Figur 2: eine Darstellung des Zusammenhangs zwischen dem zeitlichen Verhalten eines Transportmediums und dessen Länge,
- Figur 3: ein Ersatzbild des hier interessierenden Teiles einer Lackieranlage nach dem Stande der Technik,
- Figur 4: ein Ersatzbild unter Anwendung der Erfindung, und
- Figur 5: eine Blockdarstellung eines Teils einer erfindungsgemäßen Lackieranlage.

Die bereits oben erwähnte Figur 1 zeigt eine Prinzipdarstellung eines Lackiersystems mit einem Steuergerät 2, welches einen das System bildenden Lackierroboter steuert. Es liefert ein darunter dargestelltes Steuersignal in Form einer Sprungfunktion mit einer Vorhaltezeit tᵥ an einen Motor 4, der eine Lackpumpe 6 antreibt. Während der Vorhaltezeit läuft der Motor an, bis er seine vorgegebene Solldrehzahl als Ist-Drehzahl erreicht. Die Pumpendrehzahl hat denselben Verlauf. Der Lack wird von der Pumpe 6 durch ein hier als Schlauch 8 dargestelltes Transportmedium zu einer als Applikation bezeichneten Zerstäuberdüse 10 gepumpt, wobei die zeitlichen Verläufe der zugehörigen Systemgrößen wie z.B. der Volumenströme unter den betreffenden Blöcken dargestellt sind.

Figur 2 veranschaulicht den Einfluss eines biegeschlaffen Schlauches 8 auf die Ansprechzeit tₐₙ des Systems. Im oberen Teil der Zeichnung ist das Anwachsen des Lackvolumenstroms durch den Schlauch 8 bei einer kurzen Schlauchlänge gezeigt, bei welcher sich eine relativ kurze Ansprechzeit tₐₙ₁ ergibt, während die Ansprechzeit tₐₙ₂ bei einer größeren Länge des Schlauches 8 wesentlich länger ist. Baut man bei einem Lackierautomat die Dosiereinheit, die eine motorgetriebene Lackpumpe, ein Kolbendosierzylinder oder ein sonstiges geeignetes druckerzeugendes Dosiergerät sein kann, unmittelbar mit der Zerstäuberdüse zusammen oder verbindet man beide nur über ein sehr kurzes Schlauchstück, dann treten keine auf Biegeschlaffheit zurückzuführenden Verzögerungen im Ansprechverhalten auf, und die Hochlaufzeit des Pumpenmotors kann durch eine entsprechend bemessene Vorhaltezeit tᵥ berücksichtigt werden.

Es gibt jedoch Gründe, die Dosiereinheit von der Zerstäuberdüse raumlich zu trennen, wobei dann ein längeres Transportmedium verwendet werden muss. Solche Gründe liegen beispielsweise in der Wartung und Instandhaltung der Dosiereinheit, die bei räumlicher Trennung leichter möglich ist, weil sie an einer bequemer zugänglichen Stelle angeordnet werden kann, etwa außerhalb der Lackierkabine, wo sie zudem nicht dem Farbnebel ausgesetzt ist. Bei einem längeren, beispielsweise mehrere Meter langen Verbindungsschlauch vergrößert sich aber die Ansprechzeit so stark, dass sie etwa bei einem Roboterbetrieb nicht mehr tragbar ist, und hier sieht die Erfindung Maßnahmen vor, die Ansprechzeit auf ein tolerierbares Maß zu verkürzen, da bei einer Programmsteuerung des Lackiervorgangs die Farbe nicht erst mit Verspätung, sondern praktisch sofort beim Auftreten des Lackierbefehls an der Zerstäuberdüse vorhanden sein soll.

Diese Maßnahmen bestehen darin, das System zunächst kurzzeitig zu übersteuern, um es schneller ansprechen zu lassen, und dann auf die Sollwerte übergehen zu lassen. Die Übersteuerung erfolgt bei Änderungen des Systemzustandes in der jeweils gewünschten Änderungsrichtung. Um das richtige Maß an Übersteuerung zu bestimmen, wird soweit erforderlich die betreffende Anlage oder der betreffende Prozess erfindungsgemäß durch ein Ersatzmodell nachgebildet, in welchem die einzelnen Komponenten der Anlage bzw. des Prozesses in ihren Eigenschaften durch Symbole mit den zugehörigen Parametern dargestellt werden.

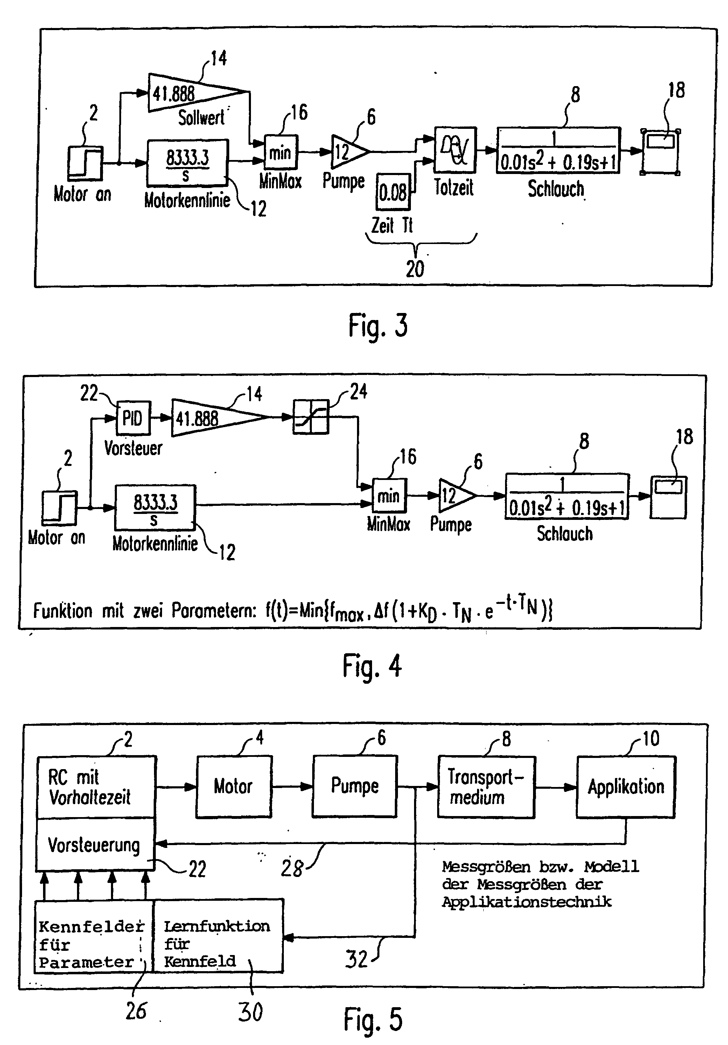

Ein solches Ersatzmodell für den hier relevanten Teil einer Lackieranlage ist in Figur 3 gezeigt. Das Steuergerät 2 liefert ein Sprungsignal als Aktionsbefehl für den Beginn eines Lackiervorgangs. Der Motor 4 wird durch die Elemente 12 (Motorkennlinie), 14 (Sollwertvorgabe) und 16 (Drehzahlgrenzen) symbolisiert. Er treibt über ein durch die Übersetzungszahl 12 symbolisiertes Getriebe die Pumpe 6 an, welche den Lack durch den hier das Transportmedium bildenden biegeschlaffen Schlauch 8 zur Zerstäuberdüse pumpt, anstelle deren im Ersatzbild ein Monitor 18 gezeichnet ist, auf dem das Ausgangssignal der Schlauchnachbildung gezeigt werden kann. Der Übertragungsfaktor des biegeschlaffen Schlauches wird durch eine Gleichung zweiter Ordnung dargestellt. Ferner ist eine Totzeit des Systems durch zusammengehörende Totzeitelemente 20 symbolisiert. In dem Ersatzmodell der Figur 3 sind beispielhaft einige Parameterwerte eingetragen, die sich in bekannter Weise aus den Daten des nachgebildeten realen Systems ermitteln lassen. Mit einem solchen Nachbildungsmodell lässt sich nun rechnerisch die Übergangsfunktion des Systems bestimmen, an der sich erkennen lässt, wie sich das entsprechende reale System verhält.

Das in Figur 4 veranschaulichte Nachbildungsmodell zeigt die erfindungsgemäße Abwandlung. Die in den vorangehenden Figuren bereits erläuterten Elemente sind in Figur 4 mit denselben Bezugsziffern bezeichnet. In dem Parallelkreis zu dem Element 12 für die Motorkennlinie ist außer dem Element 14 für die Sollwertvorgabe ein PD-Glied 22 eingefügt, dessen Differenzialcharakteristik D beim Auftreten der Sprungfunktion des vom Steuercomputer gelieferten Steuersignals eine vorübergehende Ubersteuerungskomponente im Aktivierungssignal (Aktionsbefehl) erzeugt, durch welche die Pumpe 6 vom Motor 4 kurzzeitig mit höherer Drehzahl angetrieben wird, um den Druck des flüssigen Lacks im Schlauch bis zur Zerstäuberdüse schneller aufzubauen und damit die Ansprechzeit entsprechend zu verkürzen. Ein ebenfalls in diesem Parallelzweig vorgesehenes Begrenzungsglied 24 sorgt dafür, dass die Übersteuerung nicht zu groß wird, um Schäden in der Anlage, z.B. durch Überdrehen des Motors, zu vermeiden. Soll die Lackmenge verringert werden, dann erfolgt die Übersteuerung in umgekehrter Richtung, was auch als Untersteuerung bezeichnet werden kann.

Anhand dieses Nachbildungsmodells lässt sich nun durch Variierung der PD-Charakteristik des Gliedes 22 die Übersteuerungskomponente unter Beobachtung des Ausgangssignals auf dem Monitor 18 so gestalten, dass die Ansprechzeit tₐₙ auf ein tolerierbares Maß verkleinert wird. Mit der so gefundenen Dimensionierung für das PD-Glied 22 arbeitet die entsprechende reale Anlage dann in der gewünschten Weise mit vernachlässigbar kleiner Ansprechzeit.

In Figur 4 ist eine Drehzahlfunktion f(t) unter Einfluß des PD-Gliedes in dem Modell angegeben, welche die Drehzahl f des Motors in Abhängigkeit von verschiedenen Größen zeigt: fₘₐₓ ist die maximal zulässige Motordrehzahl, Δf eine Sollwertänderung der Drehzahl, die in positiver oder negativer Richtung erfolgen kann, K_{D} ein weiter unten erläuterter Steuerparameter und T_{N} eine Zeitkonstante. Die 1 in der Klammer entspricht der Proportionalkomponente und der e-Funktions-Term der Über- bzw. Untersteuerungskomponente. Das "Min" steht für eine Drehzahlbegrenzung des Motors auf einen zulässigen Wert.

Das zugehörige Blockschaltbild dieses Teils der Anlage ist in Figur 5 veranschaulicht. Die bereits erwähnten Einheiten sind wiederum mit denselben Bezugsziffern bezeichnet wie oben. Dem Steuergerät 2 ist hier ein das PD-Glied 22 enthaltender Teil zugeordnet, der mit Vorsteuerung bezeichnet ist und dafür sorgt, dass das an den Motor abgegebene Aktionssignal die erwähnte U-bersteuerungskomponente erhält, deren Höhe und Abklingzeit sich über die Dimensionierung des PD-Gliedes nach Wunsch bemessen lässt, um die Anlage genau so weit zu übersteuern, dass die Ansprechzeit in der gewünschten Weise verkürzt wird.

Um unterschiedlichen Parametern verschiedener Anlagen oder Parameteränderungen aller beteiligten Komponenten des Farbführungssystems Rechnung zu tragen, die, um nur einige Beispiele zu nennen, durch unterschiedliche Schlauchmaterialien, Schlauchalterung oder unterschiedliche Lacksorten usw. bedingt sein können, werden diese Parameter zweckmäßigerweise in Kennfeldern dargestellt und in einem Kennfeldspeicher 26 abgelegt, um unter anderem für die Auswahl einer geeigneten Charakteristik des PD-Gliedes 22 zur Verfügung zu stehen, so dass eine die Erfindung realisierende Zusatzeinheit sich durch die Möglichkeit entsprechender Einstellung für unterschiedliche Lackieranlagen verwenden oder bei Alterung entsprechend neu einstellen lässt.

Von der Applikation kann gewünschtenfalls eine im jeweiligen Fall geeignete Messgröße, im Falle der Zerstäuberdüse 10 beispielsweise der Druck, über eine Leitung 28 zur Vorsteuerung zurückgeführt werden, um Abweichungen im Betriebsverhalten, z.B. Veränderungen der Eigenschaften des Transportmediums (z.B. Schlauchhalterung) oder anderer Systemkomponenten kompensieren zu können.

Der oben erwähnte Parameter K_{D} ist eine variable Größe innerhalb der Vorsteuerfunktion. Die als Kennfeld verwendete zweidimensionale Ausprägung dieses Parameters ergibt sich aus der Abhängigkeit von den sich ändernden (alten und neuen) Sollwerten der Fluidmenge. Für jede Länge des Transportmediums und für jeden Wert der Viskosität der Flüssigkeit oder Paste ergibt sich somit jeweils ein Kennfeld für K_{D}. Um verschiedene viskose Fluide steuern zu können, kann für die minimalen und maximalen Grenzwerte der Viskosität je ein Kennfeld ermittelt und hieraus das Kennfeld für das aktuell verwendete Fluid jeweils durch Interpolation gewonnen werden.

Wie in Fig. 5 bei 30 dargestellt ist, ist für das Kennfeld vorzugsweise eine Lernfunktion vorgesehen, d.h. es wird automatisch anhand der Messgrößen der Applikationstechnik angepasst ("gelernt"), wobei der gesamte Fluidmengenbereich durchfahren wird. Wenn bestimmte Größen nicht oder nur unzureichend gemessen werden können, so kann ein Modell für die Messgrößen (= Beobachter) der Applikationstechnik erstellt und für Lern- und Regelzwecke verwendet werden, wie durch die Leitung 32 angedeutet ist.

Bei dem hier beschriebenen Verfahren werden also die folgenden Schritte durchgeführt:
- Identifikation des mathematischen Modells des zeitlichen Verhaltens des Transportmediums (in der Regel PT2-Verhalten).
- Vorsteuerung als Funktion mit PD-Verhhalten unter besonderer Ausführung als gedämpfter D-Anteil, welches das PT2-Verhalten kompensiert.
- Ermittlung der Parameter K_{D} und T_{N} dieser Vorsteuerfunktion in Abhängigkeit eines Kennfeldes und online messbarer Grössen.
- Integration zum Gesamtsystem.

Die Vorsteuerung kann allerdings gestört werden, wenn sich noch Restenergie in dem Transportsystem befindet. Dieses Problem kann aber durch Entspannen des Transportsystems gelöst werden. Das Entspannen kann beispielsweise über eine Rückführleitung erfolgen oder auch durch gezieltes Fördern der Pumpe in Rückwärtsrichtung, wobei der Status der Restenergie zweckmäßig durch Messen des Drucks im Transportsystem ermittelt wird.

Wie schon erwähnt wurde, ist die Erfindung nicht auf die Kompensation der "Nachgiebigkeit" von Schläuchen beschränkt. Beispielsweise kann mit dem erfindungsgemäßen Verfahren auch das Ansprechverhalten einer Beschichtungsanlage verbessert werden, in der Schlupf und andere unvermeidbare Unzulänglichkeiten der Dosiervorrichtung zu unterwünschten Verzögerungen führen würden. Ähnlich wie bei dem für Schläuche beschriebenen Verfahren kann in diesem Fall z.B. die reale Förder- oder Ausflussrate der Pumpe oder sonstigen Dosiervorrichtung gemessen und das Verhalten der erfindungsgemäß nachgebildeten Anlage entsprechend übersteuert werden.

Darüber hinaus ist es auch möglich, durch kontinuierliche oder periodische Messung der Fördermenge der Dosiervorrichtung ("Auslitern") und Vergleich mit Sollwerten z.B. eventuelle ungewollte Drehzahländerungen einer Pumpe und/oder andere während des laufenden Betriebes auftretende absolute Ungenauigkeiten der Dosiervorrichtung festzustellen und durch entsprechende Korrekturfaktoren steuerungstechnisch auszugleichen. Auch hierfür können entsprechende Kennfelder vorgesehen sein.

## Patentansprüche

1. Verfahren zur Verbesserung des Ansprechverhaltens eines befehlsgesteuerten Lackiersystems, bei dem auf einen Aktionsbefehl hin ein fluides Mediums mittels eines Dosierantriebs durch ein Transportmedium zu einem Applikationselement (10) für das Medium transportiert wird, wobei zwischen dem Aktionsbefehl und der Reaktion des Applikationselements (10) Verzögerungen auftreten,
**dadurch gekennzeichnet,**
**dass** der Aktionsbefehl mit einer derart bemessenen vorübergehenden Übersteuerungskomponente in Richtung der gewünschten Änderung erzeugt wird, dass durch Nachgiebigkeiten im System bedingte Ansprechverzögerungen des Applikationselementes (10) kompensiert werden und
**dass** für die Bestimmung der Übersteuerungskomponente Kennwerte aus einem Kennfeldspeicher (26) ausgelesen werden, in welchem für bestimmte Parameter der Anlage jeweils Sätze von Kennwerten für die Bestimmung der Übersteuerungskomponente entsprechend den im Einzelfall verwendeten, durch die Parameter bezeichneten Elementen und Materialien der Anlage abgespeichert sind.

2. Verfahren nach Anspruch 1, **dadurch gekennzeichnet,**
**dass** die Anlage durch ein Ersatzmodell nachgebildet wird und dessen Parameter bestimmt werden,
**dass** das Verhalten der nachgebildeten Anlage bei verschiedenen, anfangs in Richtung der gewünschten Änderung übersteuernden und dann auf den Endwert abklingenden Eingangssignalen untersucht wird, und
**dass** dasjenige Eingangssignal als Aktionsbefehl für die reale Anlage ausgewählt wird, bei welchem das Ausgangssignal der nachgebildeten Anlage dem gewünschten Ansprechverhalten entspricht.

3. Verfahren nach Anspruch 1 oder 2, **dadurch gekennzeichnet, dass** das übersteuernde Aktionssignal aus einem Sprungsignal von der Höhe des Endwertes durch Erteilung eines einstellbaren PDoder PID-Verhaltens abgeleitet wird.

4. Verfahren nach Anspruch 3, **dadurch gekennzeichnet, dass** ein Parameterkennfeld aus Kennwerten verschiedener Elemente der Anlage erstellt wird und das PD- oder PID-Verhalten unter Auswahl von den jeweils verwendeten Elementen entsprechenden Parametern bestimmt wird.

5. Verfahren nach Anspruch 4, **dadurch gekennzeichnet, dass** Messgrößen der Anlage erfasst werden und das Parameterkennfeld anhand der Messgrößen automatisch selbstlernend angepasst wird.

6. Verfahren nach Anspruch 5, **dadurch gekennzeichnet, dass** bei der Anpassung des Parameterkennfelds der gesamte Fluidmengenbereich durchfahren wird.

7. Verfahren nach Anspruch 5 und/oder Anspruch 6, **dadurch gekennzeichnet, dass** die Messgrößen unmittelbar gemessen werden.

8. Verfahren nach Anspruch 5 und/oder Anspruch 6, **dadurch gekennzeichnet, dass** die Messgrößen anhand eines Modells ermittelt werden.

9. Verfahren nach mindestens einem der vorhergehenden Ansprüche, **dadurch gekennzeichnet, dass** das Transportmedium zur Entfernung von darin befindlicher Restenergie entspannt wird.

10. Verfahren nach Anspruch 9, **dadurch gekennzeichnet, dass** das Transportmedium über eine Rückführleitung entspannt wird.

11. Verfahren nach Anspruch 9, **dadurch gekennzeichnet, dass** der Dosierantrieb zur Entspannung des Transportmediums in Rückwärtsrichtung betrieben wird.

12. Verfahren nach Anspruch 11, **dadurch gekennzeichnet, dass** der Status der Restenergie erfasst wird, während der Dosierantrieb in Rückwärtsrichtung betrieben wird.

13. Verfahren nach einem der vorhergehenden Ansprüche, **dadurch gekennzeichnet, dass** durch kontinuierliches oder periodisches Messen der Förder- oder Ausflussrate einer das fluide Medium dosierenden Vorrichtung (6) während des Betriebes auftretende Dosierfehler dieser Vorrichtung (6) festgestellt und durch Steuerfaktoren korrigiert werden.

14. Verfahren nach einem der vorstehenden Ansprüche **gekennzeichnet durch** die Anwendung bei einer Beschichtungsanlage, bei welcher als fluides Medium ein Lack oder eine Paste oder Wachs mittels einer Dosiervorrichtung **durch** das Transportmedium einer Zerstäuber- oder Applikationsdüse zugeführt wird.

15. Lackiersystem mit einem Steuergerät (2) zur Lieferung eines Aktionsbefehls an eine druckerzeugende Vorrichtung (4, 6), die ein fluides Medium durch ein Transportmedium (8) zu einem Applikationselement (10) befördert, wobei zwischen dem Aktionsbefehl und der Reaktion des Applikationselements (10) Verzögerungen auftreten, **dadurch gekennzeichnet, dass** dem Steuergerät (2) ein PD-, PID-Glied (22) zugeordnet ist, durch welches der Aktionsbefehl mit einer derart bemessenen vorübergehenden Übersteuerungskomponente in Richtung der gewünschten Änderung erzeugt wird, dass durch Nachgiebigkeiten im System bedingte Ansprechverzögerungen des Applikationselementes (10) kompensiert werden und dass dem Steuergerät (2, 22) ein Kennfeldspeicher (26) zugeordnet ist, in welchem für bestimmte Parameter der Anlage jeweils Sätze von Kennwerten für die Bestimmung der Übersteuerungskomponente entsprechend den im Einzelfall verwendeten, durch die Parameter bezeichneten Elementen und Materialien der Anlage abgespeichert sind.

16. Lackiersystem nach Anspruch 15, **dadurch gekennzeichnet, dass** das Steuergerät (2) den Aktionsbefehl an einen Motor (4) liefert, der eine Pumpe (6) oder andere druckerzeugende Vorrichtung für das fluide Medium antreibt, und die druckerzeugende Vorrichtung (6) über einen biegeschlaffen Verbindungsschlauch (8) mit einer Zerstäuberdüse (10) verbunden ist, wobei der mit der vorübergehenden Übersteuerungskomponente erzeugte Aktionsbefehl dem Motor (4) zur Kompensation von durch die Biegeschlaffheit des Schlauches (8) bedingter Ansprechverzögerung des Lackzerstäubungsbeginns zugeführt wird.

17. Lackiersystem nach Anspruch 15 oder 16, **gekennzeichnet durch** eine Signalrückführung (28) von dem Applikationselement (10) zum Steuergerät (2).

## Claims

1. Method of improving the response behaviour of a command-controlled painting system in which in response to an action command a fluid medium is transported by means of a dosaging drive by a transport medium to an applicator element (10) for the medium, wherein delays occur between the action command and the reaction of the applicator element (10), **characterised in that** the action command is generated with a temporary override component in the direction of the desired change which is of such a magnitude that delays in response of the applicator element (10) due to flexibilities in the system are compensated for, and that for determination of the override component characteristic values are read out of a characteristic field memory (26) in which for specific parameters of the installation respective sets of characteristic values are stored for the determination of the override component according to the elements and materials of the installation which are used in the individual case and are denoted by the parameters.

2. Method as claimed in Claim 1, **characterised in that** the installation is simulated by a substitute model and the parameters thereof are determined, that the behaviour of the simulated installation is examined in the case of various input signals which initially override in the direction of the desired change and then decay to the final value, and that the input signal at which the output signal of the simulated installation corresponds to the desired response behaviour is selected for the real installation. ,

3. Method as claimed in either Claim 1 or Claim 2, **characterised in that** the overriding action signal is derived from a step function signal of the level of the final value by imparting an adjustable PD or PID behaviour.

4. Method as claimed in Claim 3, **characterised in that** a parameter characteristic field is produced from characteristic values of various elements of the installation and the PD or PID behaviour is determined by selection of parameters corresponding to the respective elements used.

5. Method as claimed in Claim 4, **characterised in that** measured values of the installation are recorded and the parameter characteristic field is automatically adapted by self-learning with the aid of the measured values.

6. Method as claimed in Claim 5, **characterised in that** in the adaptation of the parameter characteristic field the entire fluid quantity range is traversed.

7. Method as claimed in Claim 5 and/or Claim 6, **characterised in that** the measured values are measured directly.

8. Method as claimed in Claim 5 and/or Claim 6, **characterised in that** the measured values are determined with the aid of a model.

9. Method as claimed in at least one of the preceding claims, **characterised in that** the transport medium is relieved of pressure in order to remove residual energy located therein.

10. Method as claimed in Claim 9, **characterised in that** the transport medium is relieved of pressure via a return line.

11. Method as claimed in Claim 9, **characterised in that** the dosaging drive is driven in reverse in order to relieve the transport medium of pressure.

12. Method as claimed in Claim 11, **characterised in that** the status of the residual energy is determined while the dosaging drive is being driven in reverse.

13. Method as claimed in any one of the preceding claims, **characterised in that** dosaging errors of a device (6) for dosaging the fluid medium which occur during operation of this device (6) are determined by continuous or periodic measurement of the conveying or outflow rate and are corrected by control factors.

14. Method as claimed in any one of the preceding claims, **characterised by** the application in a coating installation in which a fluid medium in the form of a paint or a paste or wax is delivered by means of a dosaging device through the transport medium to an atomiser or applicator nozzle.

15. Painting system with a control device (2) for supplying an action command to a pressure-generating device (4, 6) which conveys a fluid medium through a transport medium (8) to an applicator element (10), wherein delays occur between the action command and the reaction of the applicator element (10), **characterised in that** assigned to the control device (2) is a PD or PID member (22) by which the action command is generated with a temporary override component in the direction of the desired change which is of such a magnitude that delays in response of the applicator element (10) due to flexibilities in the system are compensated for, and that assigned to the control device (2, 22) is a characteristic field memory (26) in which for specific parameters of the installation respective sets of characteristic values are stored for the determination of the override component according to the elements and materials of the installation which are used in the individual case and are denoted by the parameters.

16. Painting system as claimed in Claim 15, **characterised in that** the control device (2) supplies the action command to a motor (4) which drives a pump (6) or another pressure-generating device for the fluid medium, and the pressure-generating device (6) is connected via a flexible hose (8) to an atomiser nozzle (10), wherein the action command generated with the temporary override component is supplied to the motor (4) in order to compensate for any delay in response of the start of paint atomisation due to the flexibility of the hose (8).

17. Painting system as claimed in either Claim 15 or Claim 16, **characterised by** a signal return (28) from the applicator element (10) to the control device (2).

## Revendications

1. Procédé visant à améliorer le comportement de réponse d'un système de vernissage commandé par instructions, dans lequel, sur un ordre d'action, un produit liquide est transporté au moyen d'un mécanisme de dosage à travers un moyen de transport vers un élément d'application (10) du produit, des retards apparaissant entre l'ordre d'action et la réaction de l'élément d'application (10),
**caractérisé en ce que**
l'ordre d'action est produit avec une composante de sur-régulation temporaire, dans le sens de la modification souhaitée, mesurée de telle sorte que les retards de réponse de l'élément d'application (10) dus aux flexibilités se trouvant dans le système sont compensés et
**en ce que**, pour la détermination de la composante de sur-régulation, des valeurs caractéristiques sont lues à partir d'une mémoire (26) dans laquelle, pour certains paramètres de l'installation, des jeux de valeurs caractéristiques respectifs sont enregistrés pour la détermination de la composante de sur-régulation conformément aux éléments et matériaux de l'installation, désignés par les paramètres, utilisés dans certains cas.

2. Procédé selon la revendication 1, **caractérisé en ce que** l'installation est reproduite par un modèle de remplacement et **en ce que** ses paramètres sont déterminés,
**en ce que** le comportement de l'installation reproduite est examiné pour différents signaux d'entrée sur-régulant au début dans le sens de la modification souhaitée et décroissant ensuite vers la valeur finale et
**en ce que** ce signal d'entrée est sélectionné en tant qu'ordre d'action pour l'installation réelle, ordre dans lequel le signal de sortie de l'installation reproduite correspond au comportement de réponse souhaité.

3. Procédé selon la revendication 1 ou 2, **caractérisé en ce que** le signal d'action de sur-régulation est déduit à partir d'un signal de saut de la hauteur de la valeur finale par l'attribution d'un comportement PD ou PID réglable.

4. Procédé selon la revendication 3, **caractérisé en ce qu'**un diagramme caractéristique de paramètre est établi à partir de valeurs caractéristiques de différents éléments de l'installation et **en ce que** le comportement PD ou PID est déterminé avec la sélection des paramètres correspondant aux éléments respectivement utilisés.

5. Procédé selon la revendication 4, **caractérisé en ce que** les grandeurs de mesure de l'installation sont enregistrées et le diagramme caractéristique de paramètre est automatiquement adapté au moyen des grandeurs de mesure par autoapprentissage.

6. Procédé selon la revendication 5, **caractérisé en ce que**, lors de l'adaptation du diagramme caractéristique de paramètre, l'ensemble de la zone de quantité de fluide est traversé.

7. Procédé selon la revendication 5 et/ou la revendication 6, **caractérisé en ce que** les grandeurs de mesure sont directement mesurées.

8. Procédé selon la revendication 5 et/ou la revendication 6, **caractérisé en ce que** les grandeurs de mesure sont déterminées au moyen d'un modèle.

9. Procédé selon au moins l'une quelconque des revendications précédentes, **caractérisé en ce que** le moyen de transport est détendu pour permettre le retrait de l'énergie résiduelle se trouvant à l'intérieur.

10. Procédé selon la revendication 9, **caractérisé en ce que** le moyen de transport est détendu par le biais d'une conduite de retour.

11. Procédé selon la revendication 9, **caractérisé en ce que** le mécanisme de dosage est actionné dans le sens inverse pour la détente du moyen de transport.

12. Procédé selon la revendication 11, **caractérisé en ce que** l'état de l'énergie résiduelle est enregistré pendant que le mécanisme de dosage est actionné dans le sens inverse.

13. Procédé selon l'une quelconque des revendications précédentes, **caractérisé en ce que**, par la mesure continue ou périodique du taux de refoulement ou d'écoulement d'un dispositif (6) dosant le produit liquide, les erreurs de dosage de ce dispositif (6), apparaissant pendant le fonctionnement, sont décelées et corrigées par des facteurs de commande.

14. Procédé selon l'une quelconque des revendications précédentes, **caractérisé par** l'utilisation dans une installation de revêtement dans laquelle, en tant que produit liquide, une peinture ou une pâte ou une cire est amenée au moyen d'un dispositif de dosage à travers le moyen de transport d'une buse de pulvérisation ou d'application.

15. Système de vernissage comportant un appareil de commande (2) servant à la fourniture d'un ordre d'action à un dispositif (4, 6) produisant de la pression, dispositif qui transporte un produit liquide à travers un moyen de transport (8) vers un élément d'application (10), des retards apparaissant entre l'ordre d'action et la réaction de l'élément d'application (10),
**caractérisé en ce qu'**à l'appareil de commande (2) est attribué un organe PD, PID au moyen duquel l'ordre d'action est créé avec une composante de sur-régulation temporaire, en direction de la modification souhaitée, dimensionnée de telle sorte que les retards de réponse de l'élément d'application (10), dus à des flexibilités dans le système, sont compensés et
**en ce qu'**à l'appareil de commande (2, 22) est attribuée une mémoire (26) dans laquelle, pour certains paramètres de l'installation, des jeux de valeurs caractéristiques respectifs sont enregistrés pour la détermination de la composante de sur-régulation conformément aux éléments et matériaux de l'installation, désignés par les paramètres, utilisés dans certains cas.

16. Système de vernissage selon la revendication 15, **caractérisé en ce que** l'appareil de commande (2) fournit l'ordre d'action à un moteur (4) qui actionne une pompe (6) ou un autre dispositif produisant de la pression destiné(e) au produit liquide et **en ce que** le dispositif produisant de la pression (6) est relié à une buse de pulvérisation (10) par le biais d'un tuyau souple de raccordement (8), l'ordre d'action créé avec la composante de sur-régulation temporaire étant conduit vers le moteur (4) pour la compensation d'un retard de réponse, du début de la pulvérisation de la peinture, dû à la souplesse du tuyau flexible (8).

17. Système de vernissage selon la revendication 15 ou 16, **caractérisé par** un retour de signal (28) de l'élément d'application (10) vers l'appareil de commande (2).
